Europäisches Patentamt

European Patent Office

Office européen des brevets

(11) Publication number: **0 471 411 A1**

# EUROPEAN PATENT APPLICATION

(21) Application number: **91202053.4**

(22) Date of filing: **12.08.91**

(30) Priority: **13.08.90 NL 9001815**

(43) Date of publication of application:
**19.02.92 Bulletin 92/08**

(84) Designated Contracting States:
**AT BE DE DK ES FR GB GR IT NL SE**

(51) Int. Cl.⁵: **B65G 67/60**, B66C 19/00

(71) Applicant: **D.C.G. HOLDING AMSTERDAM B.V.**
**T.T. Melisseweg 29**
**NL-1033 SP Amsterdam(NL)**

(72) Inventor: **Ammeraal, Thomas Maria Cornelis**
**Zandweg 115**
**NL-1531 AM Wormer(NL)**

(74) Representative: **Metman, Karel Johannes et al**
**Octrooibureau Los en Stigter B.V. P.O.Box**
**20052**
**NL-1000 HB Amsterdam(NL)**

(54) **Method and apparatus for loading and/or unloading goods, in particular goods stacked on pallets, generally for use with ships.**

(57) In a method of loading and/or unloading a ship (3), a first hoisting trolley (11) displaces a first load receiving carrier (23) between the ship (3) and a parking station (15) for transferring a load (1) therebetween. A second hoisting trolley (12) displaces a second load receiving carrier (23) between the parking station (15) and the quay (4) for transferring a further load (1) therebetween. Both said load receiving trolleys (23) are exchanged between said hoisting trolleys (11, 12) in the parking station (15). To carry out the method there is provided an apparatus for loading and/or unloading goods (1), comprising a bridge (7), and first and second hoisting trolleys (11, 12), displaceable along the bridge (7) and adapted to lift/lower and displace load receiving carriers (23) suspended from them. The bridge (7) includes an intermediate parking station (15) having at least two parking places (15a, 15b) for temporarily receiving at least two load receiving carriers (23). The first hoisting trolley (11) is displaceable between the one end of the bridge (7) and the parking station (15) and the second hoisting trolley (12) is displaceable between the other end of the bridge (7) and the parking station (15).

fig.1

The invention relates to a method of loading and/or unloading goods, in particular goods loaded on pallets, specially intended for loading and unloading ships.

In a conventional method of loading or unloading a ship one load at the time is transferred between the ship and the quay by means of a load receiving means. This is carried out by hoisting the load receiving means together with the load, subsequently moving it horizontally and lowering it again. The capacity of this method is determined by the cycle time for transferring the load receiving means between the ship and the quay and the load quantity transferred each time. Departing from a maximum load capable of being transferred each time and a maximum conveying speed of the load receiving means, the capacity can only be increased by simultaneously carrying out said method on different places, which involves, however, a multiplication of the installation cost.

It is an object of the present invention to provide a method for loading and/or unloading a ship having a higher transfer capacity without the necessity of substantially larger investments.

For this purpose the invention proposes a method of loading and/or unloading a ship, wherein a first hoisting means displaces a first load receiving means between the ship and a parking station for transferring a load therebetween, while a second hoisting means displaces a second load receiving means between the parking station and the quay or the like for transferring a further load therebetween, both said load receiving means being exchanged between said hoisting means in the parking station.

In this way the capacity is almost doubled since the cycle time of a load receiving means is almost halved, while there is no need for a double investment.

In one embodiment of the method according to the invention, both hoisting means deposit their load receiving means onto first and second parking places in the parking station and subsequently pick up the load receiving means deposited by the other hoisting means and transfer it to the ship or the quay or the like, respectively.

In this embodiment both hoisting means operate double in series, wherein the load receiving means are directly exchanged by the hoisting means.

An alternative embodiment of the method according to the invention is characterized in that, the first load receiving means is hoisted from the ship by the first hoisting means and is deposited on to a first parking place of the parking station, the second load receiving means available on a second parking place being picked up by the hoisting means and being transferred to the ship, while simultaneously a third load receiving means is hoisted from the quay or the like by the second hoisting means and is deposited on to the first parking place, whereafter said second hoisting means picks up the first load receiving means deposited by the first hoisting means and transfers it to the quay or the like.

By the use of the third load receiving means, both hoisting means are permitted to deposit and pick up a load receiving means independent of each other, so that no delay is caused in the parking station and consequently the capacity is further increased.

An increase in capacity is furthermore obtained by a method wherein, according to the invention, the first hoisting means deposits one of the load receiving means in the ship and immediately thereafter picks up a further load receiving means standing ready and transfers it to the parking station.

In this manner no time is lost due to loading or unloading a load receiving means, as this may be carried out while another load receiving means is transferred. Of course such a method may also be carried out with the second hoisting means.

The invention also includes an apparatus for loading and/or unloading goods, in particular goods stacked on pallets, generally for use with ships, comprising a frame having a substantially horizontal bridge, a hoisting means displaceable along the bridge and adapted to lift/lower and displace a load receiving means suspended from it, which is characterized in accordance with the invention by a second hoisting means being displaceable along the bridge and at least a second load receiving means, said bridge including an intermediate parking station having at least two parking places for temporarily receiving at least two load receiving means, wherein the first hoisting means is displaceable between the one end of the bridge and the parking station and the second hoisting means being displaceable between the other end of the bridge and the parking station.

A simple embodiment of the apparatus according to the invention is characterized in that the two parking places of the parking station are stationary, and the paths of the hoisting means partially overlap.

To further increase the capacity of the apparatus it is favourable when it comprises at least a third load receiving means, wherein always at least one of said three load receiving means is parked in the parking station.

The parking station of the apparatus according to the invention may be constructed such that the two parking places of the parking station are positioned adjacent to each other and in longitudinal direction of the bridge, while it is also possible that the two parking places of the parking station are positioned adjacent to each other transverse to the bridge, and said hoisting means are also displaceable transverse to the bridge.

In the latter case it is also possible to create two adjacent parking places for load receiving means on the quay and/or in the ship respectively, so that one load receiving means is deposited and immediately thereafter a load receiving means standing ready is picked up again. In the former of said embodiments of the parking station it would also be possible to create on the quay and/or in the ship, respectively, two parking places positioned lengthwise of the bridge, if for this purpose the travelling trolleys can travel along the bridge to a sufficient extent.

Normally the load receiving means will preferably be constructed as a cage for receiving one or a plurality of pallet loads. In this way the loads can be conveyed through the apparatus without being handled themselves, which substantially reduces the risk of accidents or failures with the load.

In case of pallet loads including slings it is an advantage if the load receiving means are constructed as a carrying frame having hooks for picking up pallet loads surrounded by slings, the parking places being adapted such that the carrying frames are supported with the pallet loads surrounded by slings suspended therefrom.

In this apparatus the slings do not cause any problem and are only to be handled in the ship and on the quay respectively, while in the apparatus they remain suspended from the carrying frame which is transferred from one hoisting means to the other one.

Alternatively it is possible to transfer a pallet load comprising slings from above into a load receiving means constructed as a cage adapted to be loaded from above.

The apparatus according to the invention may be controlled in a fully automatic way, wherein the stop positions of the hoisting means may be controlled electrically, for example, thereby obtaining a very accurate operation and ensuring a proper exchange of the load receiving means by the hoisting means.

The invention will hereafter be elucidated with reference to the drawing showing a number of embodiments of the apparatus according to the invention by way of example.

Fig. 1 is a schematic side-view of an apparatus for loading and/or unloading a ship according to the invention, partially in sectional view.

Fig. 2 is a plan-view of the apparatus of fig. 1.

Fig. 3 is a front-view of the apparatus of fig. 1.

Fig. 4 is a view corresponding to that of fig. 1, illustrating the apparatus in his condition out of operation.

Fig. 5 is an enlarged detail of the apparatus in the view of fig. 3, illustrated in another position.

Fig. 6a and 6b show on an enlarged scale a detail of the apparatus of fig. 1, in two different positions.

Fig. 7 shows on an enlarged scale a detail of the apparatus of fig. 1, wherein the cover of the shown parking station is omitted for the sake of clarity.

Fig. 8a-d show in a perspective diagram four stages of an embodiment of the method of loading and/or unloading a ship with the aid of the apparatus of fig. 1.

Fig. 9 is a schematic view corresponding to that of fig. 8, illustrating a method of loading and/or unloading a ship with the aid of a slightly modified embodiment of the apparatus of fig. 1.

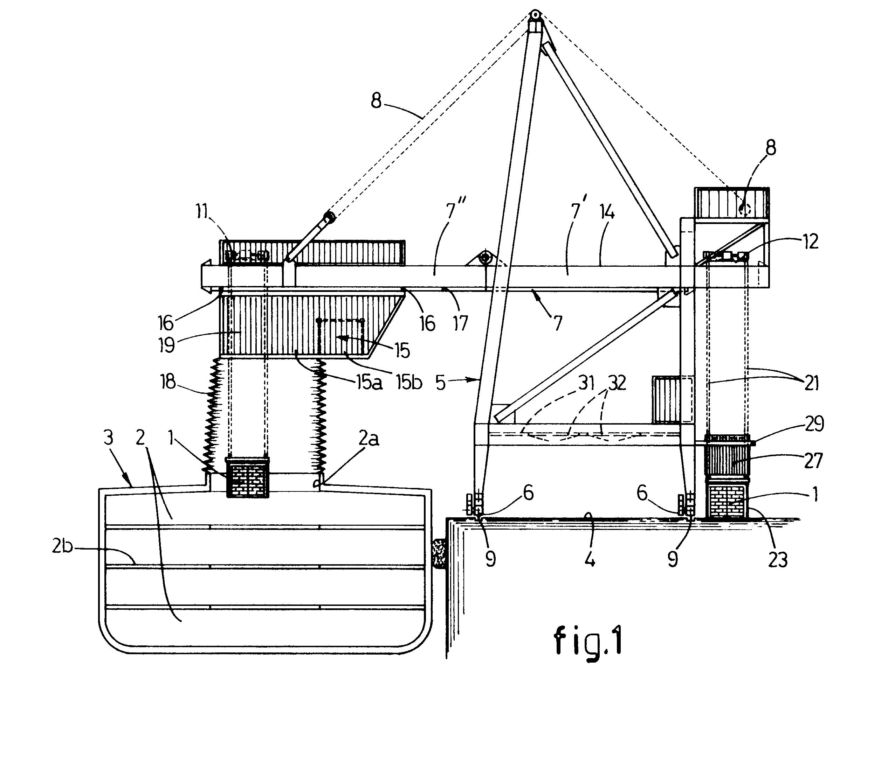

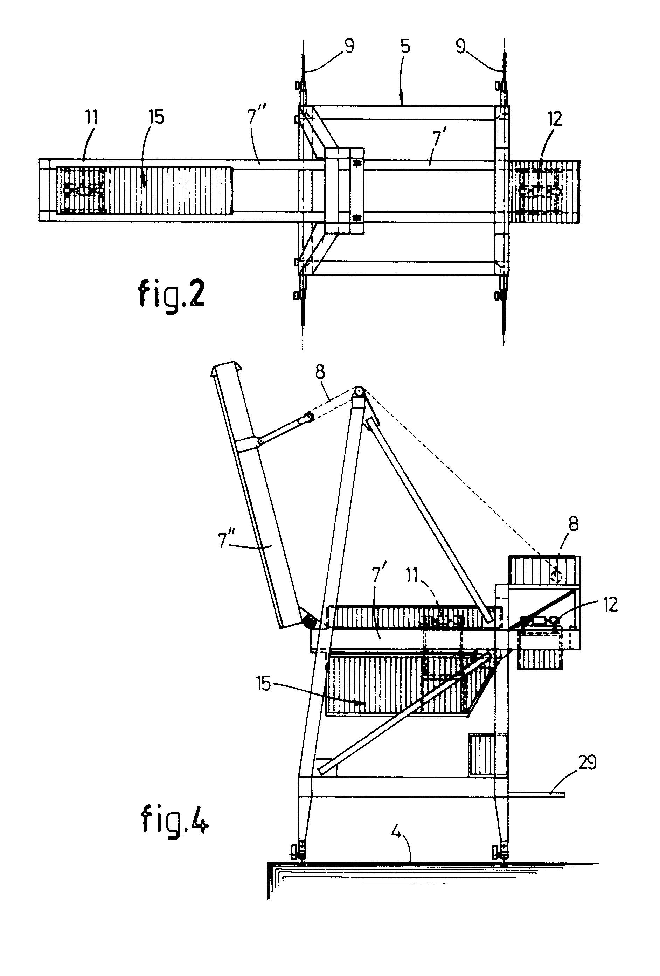

The figures, and initially fig. 1-4 thereof schematically show an embodiment of an apparatus for loading and/or unloading goods, in particular goods piled up on pallets, into and out of a hold, particularly of a ship. Fig. 1 illustrates that a pallet load 1 may be conveyed from the hold 2 of a ship 3 to the quay 4, from where the pallet load may be conveyed further on, or may be deposited in a storage accommodation not shown, for example. In principle it would of course also be possible to use the apparatus for transferring goods between two ships or from another means of transport in stead of a ship.

The apparatus according to the invention comprises a portal frame 5 adapted to run on rails 9 along the quay 4 by means of drivable wheels 6. To the frame 5 is mounted a bridge 7 consisting of a stationary bridge part 7' extending above the quay 4 and a cantilevered and upwardly pivotable bridge part 7'' positioned in the extension of the stationary bridge part and being pivotable up and down by means of a hoisting gear 8.

In the apparatus are provided a first travelling trolley 11 and a second travelling trolley 12, both serving as hoisting means. Said travelling trolleys 11 and 12 may be displaced on rails 14 over the bridge 7 independent of each other by means of their own driven running parts 13.

The bridge 7 further displaceably supports a parking station 15 having two parking places 15a and 15b disposed adjacent to each other in longidutinal direction of the bridge 7, the parking station 15 being provided with wheels 16 adapted to roll over horizontal flanges 17 of the bridge 7. In this way the position of the parking station 15 and the travelling trolley 11 cooperating with it is permitted to be adapted to the position of the entrance 2a of the ship's hold 2 of a particular ship 3 on the one hand, while the parking station 15 is permitted to be displaced to the stationary bridge part 7' of the bridge 7 on the other hand, so that then the pivotable bridge part 7' is allowed to pivot upwardly, preventing the apparatus according to the invention from hindring a ship which is manouvring in front of the quay (see fig. 4). In these cases the travelling trolley 11 follows the movements of the parking station. Under the parking station 15 is suspended an accordeon-shaped shaft 18 for the connection to the entrance 2a of the ship's hold 2 in order to protectively cover the transfer of the loads 1 , by means of the travelling trolley 11, between intermediate decks 2b in the hold of the ship 3 and the parking station 15 comprising a cover 19.

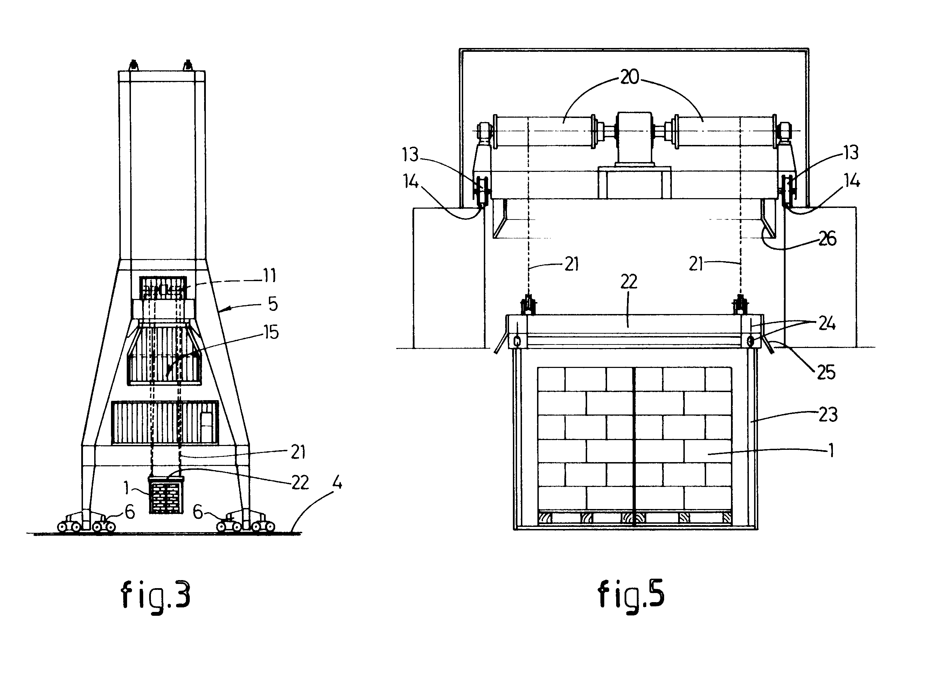

It is shown particularly in fig. 5 that the travelling trolley 11 and also the travelling trolley 12 comprises coupled winch driving gears 20, each adapted to lift and lower a cable 21, a carrying means 22 being suspended from the cables 21. This carrying means 22 is intended to quickly pick up and put down again a load receiving means 23, in the embodiment of fig. 5 consisting of a cage in which four pallet loads 1 positioned in square may be received. The transfer of these pallet loads 1 between the ship 3 and the quay 4 is consequently possible without having to handle the pallets themselves. To couple the load receiving means 23 to the carrying means 22, they are provided with couplings 24 consisting, for instance, of twist-locks generally known in the container transport field, the locking pin of such a twist-lock being adjustably mounted to the carrying means 22 and adjustable by adjusting means, for instance an electric adjusting means, the locking pin being adapted to engage into a respective recess in the load adjusting means 23 and to be locked therein by being turned. If desired, the carrying means 22 may be guided in horizontal direction when it is moved to the load receiving means 23 in order to couple them together, and for this purpose the carrying means 22 is provided with a funnel-shaped guide 25 for catching the load receiving means 23 into the carrying means 22 in case they are not properly aligned.

A funnel-shaped guide 26 is also formed on the travelling trolleys 11 and 12 for catching-in the carrying means 22 when it is lifted. This funnel-shaped guide 26 is also intended to fix the carrying means 22 and possibly the load receiving means 23 suspended therefrom with respect to the travelling trolley 11, 12 so that the carrying means 22 suspended from the cables 21 is prevented from swinging when the travelling trolley 11, 12 accelerates or decelerates during its starts and stops. This makes it possible to carry out fast movements without adversely affecting the positioning accuracy of the carrying means 22 and the load receiving means 23 at the parking places 15a and 15b in the parking station 15.

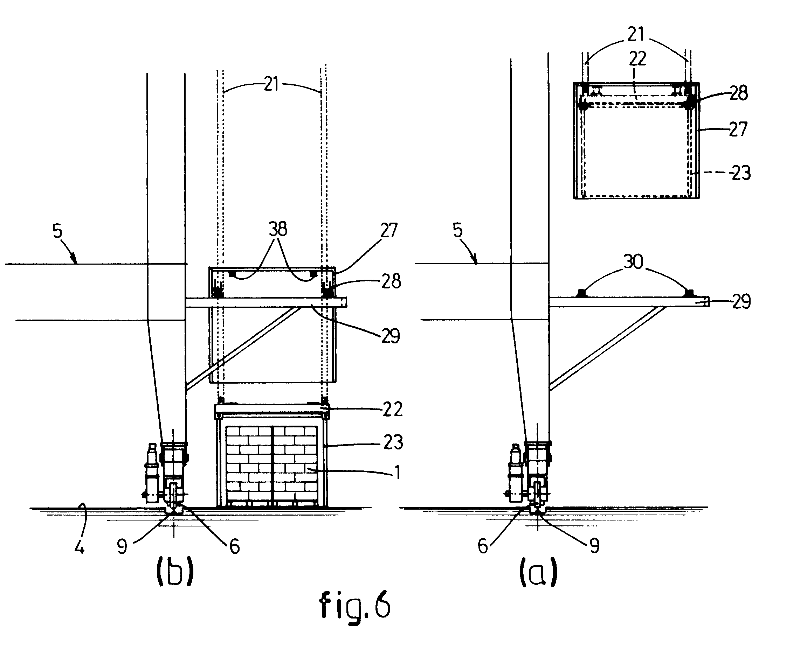

As shown in particular by fig. 1 and 6, in order to protect the pallet load 1 during its transport through the apparatus, the carrying means 22 of the travelling trolley 12 is provided with a hood 27 adapted to shift over the carrying means 22 and the load receiving means 23 suspended therefrom and consequently to protect the pallet load 1 on top and on the sides against external influences. In the case of a cage as load receiving means 23 there is no need for protection on the underside, since the floor of the cage offers protection there. In case of a pallet load 1 having slings with which it is suspended from the load receiving means 23, the hood 27 could possibly be provided with an openable and closable movable bottom so that this pallet load 1 is protected on all sides. It is noted herewith that this protection on all sides is only necessary with very delicate products in extreme climates. Mostly protection on top and on the sides is sufficient to protect the load against precipitation.

As can be seen particularly in fig. 6, the hood 27, when lowering the load receiving means 23 by the travelling trolley 12, is intercepted at a distance above the quay 4 so that the carrying means 22 with the load receiving means 23 suspended therefrom slide from under the hood 27 thereby releasing the load receiving means 23 in order to uncouple the load receiving means 23 from the carrying means 22 and to carry it away, or to make it possible that the pallet load 1 is removed from the load receiving means 23.

For intercepting the hood 27, there are fixed to the portal frame 5 of the apparatus horizontal beams 29 on either side of the path of the hood 27 and projecting into the path of supports 28 on the outside of the hood 27, the horizontal beams 29 being provided with buffers 30 on which the supports 28 may rest. The vertical position of the supports 28 on the hood 27 and of the beams 29 is chosen such that the carrying means 22 has just left the hood 27 when the load receiving means 23 stands on the quay 4. When the carrying means 22 is hoisted again the hood 27 is also carried along upwardly at a certain moment when the hood 27 rests on the carrying means 22 by means of buffers 38. Possibly there may be provided around the place where the load receiving means 23 is deposited on the quay 4 a roof (not shown) for protecting the deposited pallet load 1 against precipitation, the roof having an opening for permitting the load receiving means 23 to pass. Further it is possible to lower the load receiving means 23 together with the pallet load 1 not entirely at the end of the bridge 7 facing away from the ship, but for instance between the rails 9 on the quay 4. In fig. 1 there is fixed, for this purpose, a roof 31 to the portal frame 5 having closable passage openings 32 therein to allow the passage of the load receiving means 23 with the pallet load 1.

For allowing the entrance and exit of the travelling trolley 12 with the carrying means 22 and the load receiving means 23 suspended therefrom, the cover 19 of the parking station 15 should be provided on the quay side with an opening which may be closable by means of a flexible or a movable closure. On the other hand, it is of course also possible to extend the cover 19 of the parking station 15 in the direction to the stationary bridge part 7', possibly accordeon-shaped, and also to provide a protective shaft on the quay side, so that also in this manner a full protection of the pallet load 1 during the transport thereof through the apparatus is ensured. If the circumstances allow, it is possible to work without or with a minimum protection.

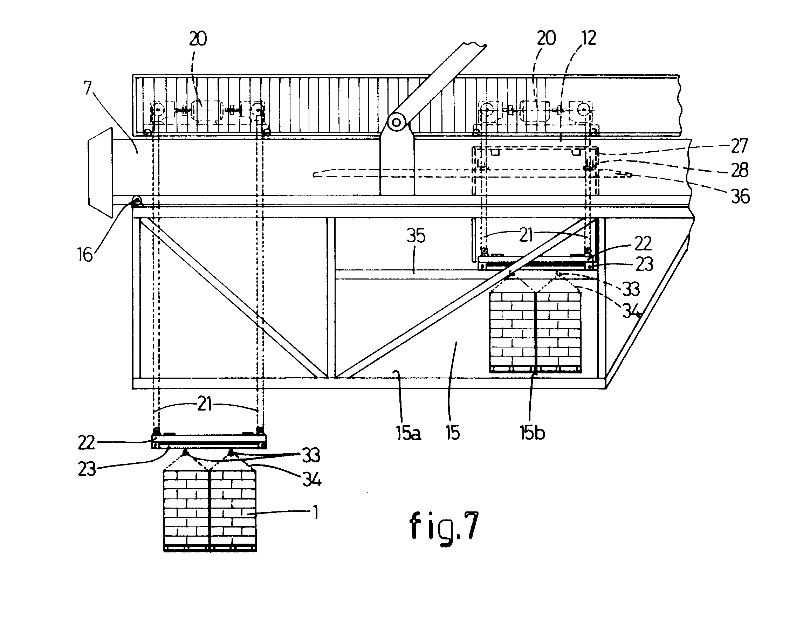

Fig. 7 shows the parking station 15 without cover 19 and in the situation in which the load receiving means 23 do not consist of cages but of carrying frames comprising hooks 33 for picking up pallet loads 1 surrounded by slings 34. For this purpose the parking places 15a and 15b of the parking station 15 are equipped with parking beams 35 for supporting the load receiving means 23 constructed as carrying frame in such a manner that the pallet loads 1 hanging in slings are not deposited but remain suspended from the load receiving means 23. The handling of this load receiving means constructed as carrying frame, therefore, takes place in the same way as with load receiving means 23 constructed as cages. Fig. 7 further illustates a supporting beam 36 similar to the supporting beam 29 and adapted to support the hood 27 such that the respective load receiving means 23 and the pallet load 1 exit from under the cap 27.

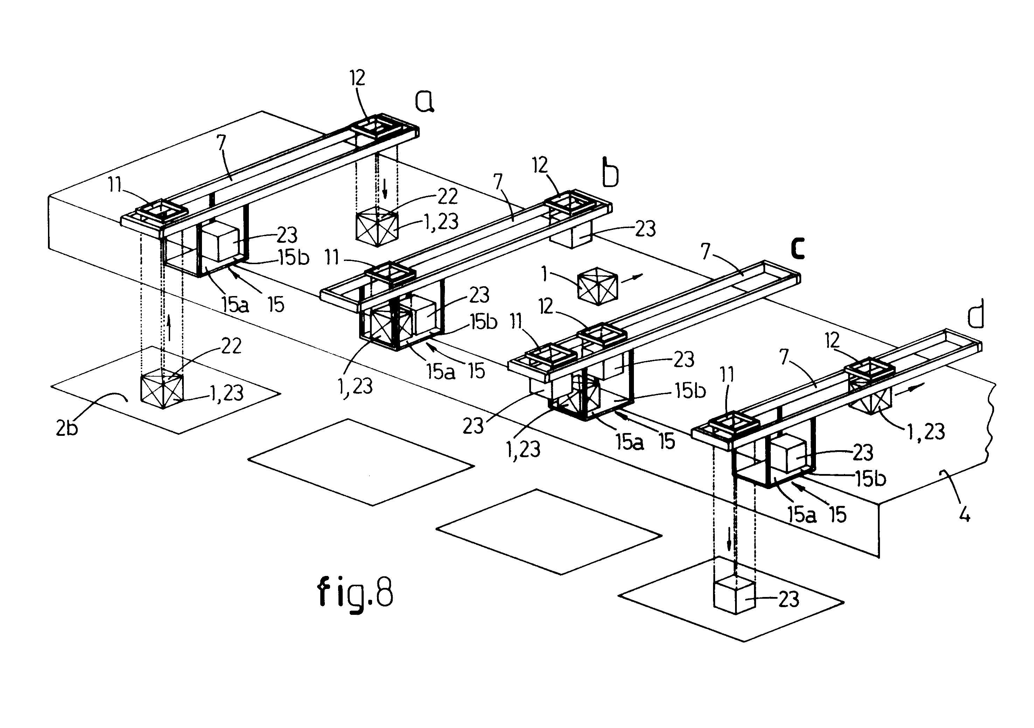

Fig. 8a-8d show four stages of a method of loading and/or unloading a ship (only an intermediate deck 26 of the hold is shown), which may be carried out with the apparatus according to fig. 1-7. In the situation as shown a ship is unloaded, but the method takes place in the same way when a ship is loaded, in which only the condition of the load receiving means 23 of being filled or not is just reversed. In fig. 8-9 a load receiving means 23 without pallet load 1 is indicated as a cube, and a load receiving means with pallet load 1 as a cube having a cross on the outer surfaces.

In fig. 8a, a load receiving means 23 filled with a pallet load 1 is just hoisted by the cables 21 of the winch driving gear 20 of the travelling trolley 11, while on the other end of the apparatus a load receiving means 23 filled with a pallet load 1 is just deposited on the quay 4. On one of the parking places 15a, 15b of the parking station 15 (in this case parking place 15b) is a third load receiving means 23 which serves as buffer but, in principle, could also be omitted as will be elucidated later on.

In fig. 8b the travelling trolley 11 has just deposited the load receiving means 23 with a pallet load 1 therein on to the parking place 15a after having it fully hoisted and horizontally displaced a certain distance in the direction to the quay 4. Subsequently the carrying means 22 of this travelling trolley 11 is uncoupled from the load receiving means 23 so that, when the carrying means 22 is hoisted slightly upwardly, the load receiving means 23 will remain standing on the parking place 15a. The travelling trolley 12 on the quay side has its carrying means 22 uncoupled from the load receiving means 23 with pallet load 1 (or as an alternative pallet load 1 is removed from the respective load receiving means 23, for instance by means of fork lift trucks), whereafter an empty load receiving means 23 is coupled to the carrying means 22 and is hoisted by the winch driving gear 20 of the travelling trolley 12 and is then displaced horizontally along the bridge 7 in the direction to the parking station 15.

Fig. 8c shows the situation in which the travelling trolley 11 has now coupled to its carrying means 22 the empty load receiving means 23 which was standing on the parking place 15b, has hoisted it and has displaced it along the bridge in the direction to the ship. In this operation the travelling trolley 11 is first moved from above the parking place 15a to the parking place 15b, while the lifted, empty load receiving means 23 is lifted over the full load receiving means 23 on the parking place 15a. In the situation according to fig. 8c the travelling trolley 12 has now arrived above the parking place 15b, and the travelling trolley 12 will subsequently deposit the empty load receiving means 23 on the parking place 15b.

In the situation of fig. 8d the winch driving gear 20 of the travelling trolley 11 has lowered the empty load receiving means 23 in order to pick up a new pallet load. The travelling trolley 12, after depositing the empty load receiving means 23, is moved along the bridge 7 to the parking place 15a, then the full load receiving means 23 is coupled to the carrying means 22 of the travelling trolley 12, whereafter the full load receiving means 23 is lifted over the empty load receiving means 23 standing on the parking place 15b and is conveyed in the direction to the quay 4.

The next stage in this method corresponds to that shown in figure 8a. In this manner a ship can be loaded or unloaded in a fast and efficient manner.

As mentioned before, different versions of this method are possible. For instance it is possible to work only with two load receiving means 23 in the apparatus, whereby the travelling trolleys 11 and 12 deposit a full and empty load receiving means 23, respectively, on to the parking places 15a and 15b substantially simultaneously, whereafter the travelling trolleys 11 and 12 subsequently pick up the load receiving means 23 deposited by the other travelling trolley 12, 11 respectively and transfer them to the ship and the quay 4, respectively.

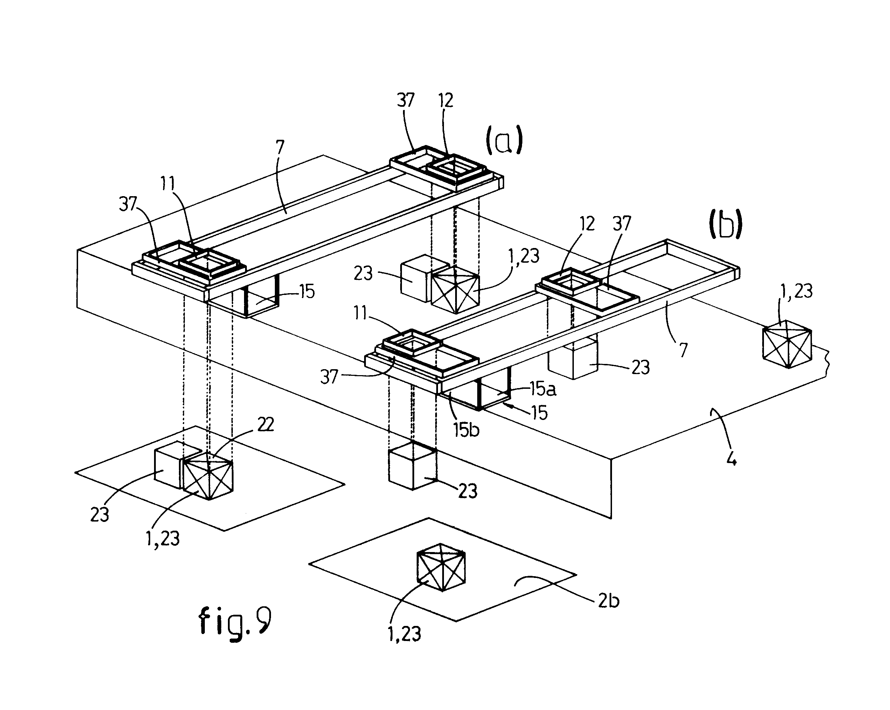

In fig. 9a and 9b is shown a further version of the method, which can be carried out with a slightly modified apparatus. The apparatus in this case is provided with travelling trolleys 11 and 12, each movable on a intermediate frame 37 in transverse direction of the bridge 7, said intermediate frames 37 each being displaceable along the bridge 7 having a double width. With this apparatus it is possible to quickly exchange load receiving means 23 both on the quay side and in the ship. Then if one load receiving means 23 is deposited with the respective travelling trolley 11, 12 in its one extreme transverse position, the travelling trolley 11, 12, after uncoupling of the load receiving means 23 from the carrying means 22, can be moved to its other extreme transverse position, whereafter the load receiving means 23 standing ready under it can be coupled and hoisted immediately. In this way no time is lost by introducing or removing a pallet load 1 into or out of a load receiving means 23, or by discharging a deposited load receiving means and supplying another load receiving means to be hoisted.

This version of fig. 9 may be carried out both with or without buffer load receiving means 23 in the parking station 15. The parking station 15 may have two parking places 15a and 15b in longitudinal direction of the bridge 7 as well as two parking places 15a and 15b in transverse direction of the bridge 7. Further it would also be possible to equip the parking place 15 with four parking places, for example positioned in a square, wherein also more buffer load receiving means 23 could be used. Further it would also be possible to use a double travelling trolley 11, 12 respectively having an intermediate frame 37 only on the ship's side or on the quay side and on the other side only a single travelling trolley 12, 11. This would be of advantage in situations in which one should work faster on one side of the apparatus than on the other side in order to equalize the cycle times of both travelling trolleys 11 and 12.

To increase the capacity of the apparatus it can also be equipped with two separate parallel bridges having respective hoisting means and parking places, or the bridge 7 can be constructed in a double fashion.

## Claims

1. Method of loading and/or unloading a ship (3), wherein a first hoisting means (11) displaces a first load receiving means (23) between the ship (3) and a parking station (15) for transferring a load (1) therebetween, while a second hoisting means (12) displaces a second load receiving means (23) between the parking station (15) and the quay (4) or the like for transferring a further load (1) therebetween, both said load receiving means (23) being exchanged between said hoisting means (11, 12) in the parking station (15).

2. Method according to claim 1, wherein both hoisting means (11, 12) deposit their load receiving means (23) on to first and second parking places (15a, 15b) in the parking station (5) and subsequently pick up the load receiving means (23) deposited by the other hoisting means (11, 12) and transfer it to the ship (3) or the quay (4) or the like, respectively.

3. Method according to claim 1, wherein the first load receiving means (23) is hoisted from the ship by the first hoisting means (11) and is deposited on to a first parking place (15a) of the parking station (15), the second load receiving means (23) available on a second parking place (15b) being picked up by the hoisting means (11) and being transferred to the ship (3), while simultaneously a third load receiving means (23) is hoisted from the quay or the like (4) by the second hoisting means (12) and is deposited on to the first parking place (15a), whereafter said second hoisting means (12) picks up the first load receiving means (23) deposited by the first hoisting means (11) and transfers it to the quay (4) or the like.

4. Method according to one of the preceding claims, wherein the first hoisting means (11) deposits one of the load receiving means (23) in the ship and immediately thereafter picks up a further load receiving means (23) standing ready and transfers it to the parking station (15).

5. Method according to one of the preceding claims, wherein the second hoisting means (12) deposits one of the load receiving means (23) on to the quay (4) or the like and, immediately thereafter, picks up a further load receiving means (23) standing ready and transfers it to the parking station (15).

6. Apparatus for loading and/or unloading goods (1), in particular good stacked on pallets, generally for use with ships (3), comprising a frame (5) having a substantially horizontal bridge (7), a hoisting means (11) displaceable along the bridge (7) and adapted to lift/lower and displace a load receiving means (23) suspended from it, **characterized** by a second hoisting means (12) being displaceable along the bridge (7) and at least a second load receiving means (23), said bridge (7) including an intermediate parking station (15) having at least two parking places (15a, 15b) for temporarily receiving at least two load receiving means (23), wherein the first hoisting means (11) is displaceable between the one end of the bridge (7) and the parking station (15) and the second hoisting means (12) being displaceable between the other end of the bridge (7) and the parking station (15).

7. Apparatus according to claim 6, wherein the two parking places (15a, 15b) of the parking station (15) are stationary, and the paths of the hoisting means (11, 12) partially overlap.

8. Apparatus according to claim 7, comprising at least a third load receiving means (23), wherein always at least one of said three load receiving means (23) is parked in the parking station (15).

9. Apparatus according to one of claims 6-8, wherein the two parking places (15a, 15b) of the parking station (15) are positioned adjacent to each other and in longitudinal direction of the bridge (7).

10. Apparatus according to one of claims 6-8, wherein the two parking places (15a, 15b) of the parking station (15) are positioned adjacent to each other transverse to the bridge, and said hoisting means (11, 12) being also displacaeble transverse to the bridge (7).

11. Apparatus according to one of claims 6-10, wherein the load receiving means (23) are constructed as a cage for receiving a pallet load (1).

12. Apparatus according to one of claims 6-10, wherein the load receiving means (23) are constructed as a carrying frame having hooks (33) for picking up pallet loads (1) surrounded by slings (34), the parking places (15a, 15b) being adapted such that the carrying frames (23) are supported with the pallet loads (1) surrounded by slings (34) suspended therefrom.

13. Apparatus according to one of claims 6-12, wherein the hoisting means comprise travelling trolleys (11, 12) running on rails (14).

14. Apparatus according to one of claims 6-13, wherein the hoising means (11, 12) each comprise a carrying means (22) suspended from four hoisting cables (21) and being adapted to be coupled to each of the load receiving means (23) by means of a coupling (24).

15. Apparatus according to claim 14, wherein the coupling (24) consists of four twist locks being remotely controled, for instance electrically, hydraulically or pneumatically.

16. Apparatus according to one of the preceding claims, wherein each load receiving means (23) can be fixed in horizontal direction with respect to a part (20) of each hoisting means (11, 12), which is displaceable along the bridge.

17. Apparatus according to one of claims 6-16, wherein the parking station (15) is covered at least on the sides and on top, between the parking station (15) and the hold (2) of the ship (3) may be provided a shaft (18), and the second hoisting means (12) including a hood (27) for protecting the load (1).

18. Apparatus according to one of claims 6-16, wherein the whole path of both hoisting means (11, 12) is covered at least on the sides and on top.

19. Apparatus according to one of claims 6-18, wherein the parking station (15) is displaceable along the bridge (7).

20. Apparatus according to one of claims 6-16, wherein the bridge (7) includes a stationary bridge part (7') and a protuding pivotable bridge part (7''), and the parking station (15) being displaceable from the pivotable (7'') to the stationary bridge part (7').

21. Apparatus according to one of claims 6-20, wherein the load receiving means (23) may be lifted and lowered from and to several load or unload points on different positions along the bridge.

22. Apparatus according to one of claims 6-21, comprising parallel bridges (7) having their own displaceable hoisting means (11, 12), or comprising parallel paths for independent sets of hoisting means (11, 12).

fig.1

EP 0 471 411 A1

fig.2

fig.4

fig.5

fig.3

fig.6

EP 0 471 411 A1

fig.7

fig.8

fig.9

EP 0 471 411 A1

**European Patent Office**

**EUROPEAN SEARCH REPORT**

Application Number

**EP 91 20 2053**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NL-A-8 702 398 (M. GIESSELBACH) <br> * page 4, line 34 - page 7, line 4; figures * * <br> – – – | 1,4,6,11, 12,20,21 | B 65 G 67/60 <br> B 66 C 19/00 |
| A | EP-A-0 281 181 (N.V. WIEMAR) <br> * claims 1,2,10,14,15; figures * * <br> – – – | 1,6,10,11 | |
| A | EP-A-0 339 015 (JONKE H.) ABSTRACT <br> * claims 1,15,18,19; figures * * <br> – – – – – | 1,2,6-8, 13,15 | |

| TECHNICAL FIELDS SEARCHED (Int. Cl.5) |
|---|
| B 65 G <br> B 66 C |

The present search report has been drawn up for all claims

| Place of search | Date of completion of search | Examiner |
|---|---|---|
| The Hague | 08 November 91 | VAN ROLLEGHEM F.M. |